# EUROPEAN PATENT APPLICATION

(11) **EP 1 284 462 A2**
(43) Date of publication of application: **19.02.2003**
(21) Application number: 02018350.5
(22) Date of filing: 14.08.2002
(51) Int. Cl.: G06F 17/30

(54) **Document display apparatus, method, and storing medium**

(30) Priority: 15.08.2001 JP 2001246468; 16.09.2001 JP 2001324215; 19.12.2001 JP 2001385355
(71) Applicant: Square Co., Ltd., Meguro-ku, Tokyo 153-8688 (JP)
(72) Inventor: Yoshioka, Mitsuo, c/o Square Co., Ltd., Tokyo 153-8688 (JP)
(74) Representative: Grünecker, Kinkeldey, Stockmair & Schwanhäusser Anwaltssozietät

(57) **Abstract**

A document display method displays information quickly and properly by receiving a description file in which multiple pages forming the documents are defined. The method includes receiving, from a server, a separate file defined in a first page to be displayed first in the received description file. The method further includes analyzing the first page of the received description file to display the first page by using the received separate file. The method further includes analyzing a second page of the description file and receiving a separate file defined in the second page, from the server, after receiving all of the separate files defined in the first page.

## Description

### CROSS REFERENCE TO RELATED APPLICATIONS

The present disclosure relates to subject matter contained in Japanese Patent Application No. 2001-246468, filed on August 15, 2001, Japanese Patent Application No. 2001-324215, filed on September 16, 2001 and Japanese Patent Application No. 2001-385355, filed on December 19, 2001, the disclosures of which are expressly incorporated herein by reference in their entireties.

### BACKGROUND OF THE INVENTION

### 1. Field of the Invention

The present invention relates to a document display. More particularly, it relates to displaying document content described in a markup language.

### 2. Description of the Related Art

With the development of the Internet, information is delivered so that clients can view documents stored in a WWW (World Wide Web) server by using browser software. The documents stored in the WWW server are described in a markup language, based on, for example, HTML (Hyper Text Markup Language). The markup language is a description language for defining the logic structure and layout of the documents by using a reserved word called a tag.

A page description file described in a markup language treats characters, images, and sounds described in a page as an independent object, and defines the layout such as the position and the size of the object arranged on the page and the content of the object. The content of the object such as characters and the like may be directly written into a page description file, or it may be stored as a separate file. The separate file is associated with a page description file by describing its file name in the page description file. Further, a link destination can be described in an object called an anchor, which can show the documents defined in the other linked page description file.

Browser software stored in a personal computer of a client acquires the page description file obtained from the WWW server and the separate file including the content of the object, and analyzes the content of the page description file. The browser software arranges the object according to the analyzed result, to reproduce a page. Thus, by controlling characters, images, and sounds as an object in a unified way, the contents and the layout of an object can be more flexibly varied and information can be represented in various ways.

A page which is not displayed entirely in the display screen of a client' s personal computer can be viewed by a scroll function belonging to the browser software. In case of a page including a large amount of information, however, it takes a long time before the page appears properly, and it requires a large amount of scroll operation to view the information of the page, which is inconvenient for a user. When the information is divided into multiple pages, a link may be attached to the pages so that a client can view the information.

When dividing the information into multiple pages, however, the corresponding file is not transferred from a server until a user specifies the link destination in order to display the next page. Therefore, it takes a long time before the next page appears.

### SUMMARY OF THE INVENTION

Taking the above problem into consideration, an object of the invention is to provide a document display apparatus, a document display method, and a storing medium capable of displaying information properly and quickly.

In order to achieve the above object, according to first aspect of the invention, there is provided a document display apparatus for receiving documents described in a markup language from a server connected through a network and displaying the documents. The document display apparatus includes a first receiving system that receives a description file in which multiple pages forming the documents are defined. The document display apparatus further includes a second receiving system that receives, from the server, a separate file related to a first page in which contents of characters, images, and/or sounds defined by an initial display of the received description file are written. The document display apparatus further includes a first displaying system that analyzes the initial display page of the received description file and displays the initial display page by using the separate file. The document display apparatus further includes a third receiving system that receives, from the server, a separate file relating to a second page in which contents of characters, images, and/or sounds defined by a second page of the description file are written. The separate file relating to the second page is received after all of the separate files relating to the first page are received.

According to a second aspect of the invention, there is provided a document display method for receiving documents described in a markup language from a server connected through a network and displaying the documents on a display system. The document display method includes receiving a description file in which multiple pages forming the documents are defined. The document display method further includes receiving, from the server, a separate file in which contents of characters, images, and/or sounds defined by an initial display page of the received description file are written. The document display method further includes analyzing the initial display page of the received description file to display the initial display page by using the separate file. The document display method further includes receiving, from the server, a separate file (associated with a second page) in which contents of characters, images, and/or sounds defined by a second page of the description file are written. The separate file associated with the second page is received after all of the separate files associated with the first page have been received.

According to third aspect of the invention, there is provided a recording medium on which is recorded a program executed by a computer for receiving documents described in a markup language from a server connected through a network and displaying the documents on a display system. The program causes the computer to receive a description file in which multiple pages forming the documents are defined. The program further causes the computer to receive, from the server, a separate file in which contents of characters, images, and/or sounds defined by an initial display page of the received description file are written. The program further causes the computer to analyze the initial display page of the received description file to display the initial display page by using the received separate file. The program further causes the computer to receive, from the server, a separate file (associated with a second page) in which contents of characters, images, and/or sounds defined by a second page of the description file are written. The separate file associated with the second page is received after all of the separate files associated with the initial page have been received.

### BRIEF DESCRIPTION OF THE DRAWINGS

Fig. 1 shows a system for providing a message exchange according to an embodiment of the invention.
Fig. 2 is a block diagram showing a video game machine implementing the message exchange method according to an embodiment of the invention installed.
Fig. 3 shows the structure of a software module including a program for realizing the message exchange according to an embodiment of the invention.
Fig. 4 is a diagram for explaining a page description file.
Fig. 5 is a flowchart showing a document display according to an embodiment of the invention.
Fig. 6 is a sequence view showing the procedure of browser software and an image drawing engine according to an embodiment of the invention.

### DESCRIPTION OF THE PREFERRED EMBODIMENTS

A preferred embodiment of the invention will be described in detail with reference to the drawings.

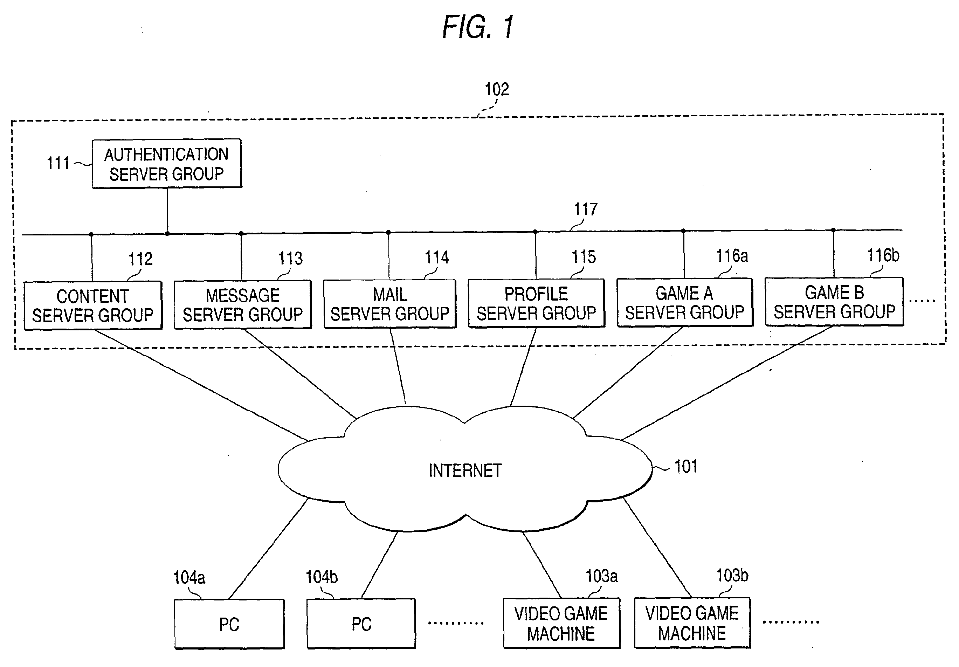

Fig. 1 shows an example of a system for displaying documents according to an embodiment of the invention. A server group 102 of an ASP, video game machines 103a and 103b and/or personal computers 104a and 104b serving as clients are all connected with the Internet 101.

The server group 102 includes multiple server groups. An authentication server group 111 is provided for managing accounts for user authentication, and a content server group 112 provides a browsing service of content including sounds and animations. Furthermore, a message server group 113 provides an environment for chat and messaging, and a mail server group 114 provides an electronic mail service. Furthermore, the ASP server group 102 includes a profile server group 115 for managing a profile of a user, and a game A server group 116a and game B server group 116b for providing a game environment. Each server group is connected with each other through a LAN 117.

Such a structure enables a user to be authenticated by accessing the authentication server group 111 in the ASP server group 102 from the video game machine 103a or 103b, or the personal computer 104a or 104b through the Internet 101. The ASP server group 102 sends a menu screen to the authenticated user. The user selects each service displayed on the menu screen to connect the video game machines 103a, 103b or the personal computer 104a, 104b with the server group corresponding to the service. Thus, the user can receive the desired service.

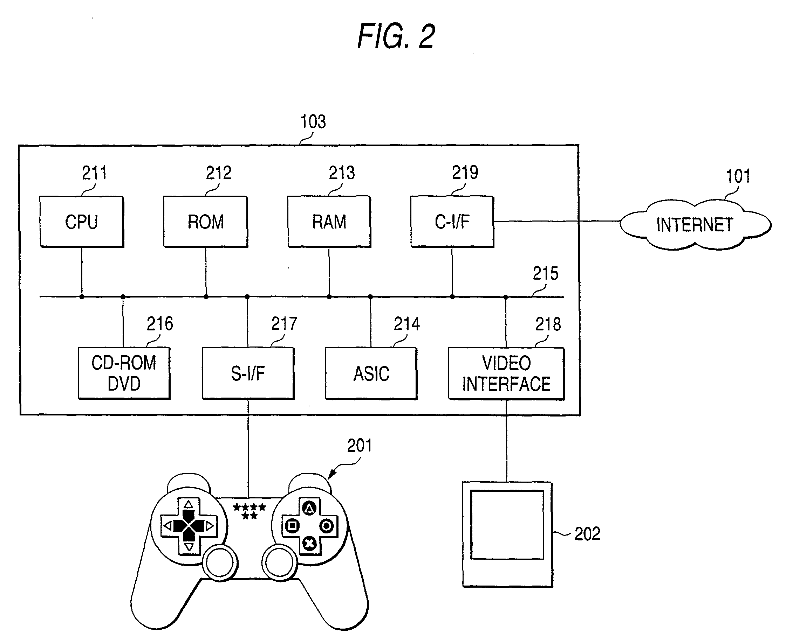

Fig.2 is a block diagram showing a video game machine implementing a document display according to an embodiment of the invention. The video game machines 103a, 103b include a CPU 211 for controlling the overall system, and a ROM 212 for storing a basic program such as a BIOS. The video game machines 103a, 103b include a RAM 213 for storing a game program and a program for the document display according to the invention. The RAM 213 is used as a temporary storing area. Furthermore, an application-specific integrated circuit (ASIC) 214 is provided for image processing. The components are connected with each other through a bus 215.

Further, the video game machines 103a, 103b include a CD-ROM drive 216 for reading out a program from a CD-ROM storing a game program and a program for the document display according to the invention. The video game machines 103a, 103b further include a serial interface 217 connected to a game controller 201, and a video interface 218 connected to a TV monitor 202. A communications interface 219 is provided for connecting the game machine 103a, 103b with the Internet 101. The components are also connected with each other through the bus 215.

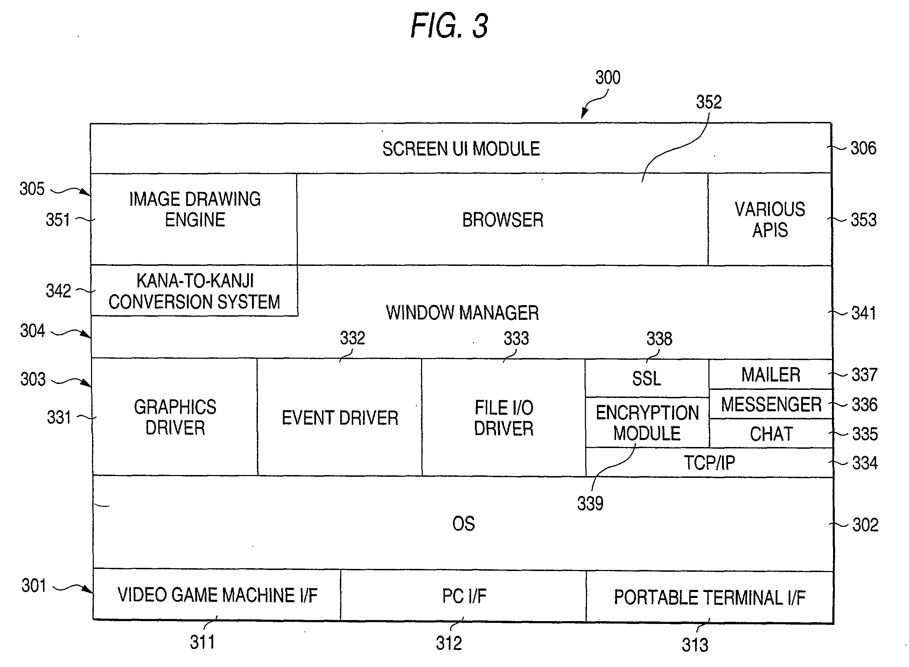

Fig. 3 is a view showing the structure of a software module including a program for realizing the document display according to an embodiment of the invention. For example, in the game video machine 103a, 103b, the CPU 211 reads out a software module 300 from the CD-ROM through the CD-ROM drive 216, and stores it into the RAM 213 to execute it. The software module 300 includes six layers from the first layer 301 to the sixth layer 306.

The first layer 301 is a physical interface, including a video game machine IF 311, a personal computer IF 312, or a portable terminal IF 313 depending on the hardware where the software module 300 is installed. The second layer 302 is an operating system.

The third layer 303 includes various drivers and communication protocols. The drivers include a graphics driver 331 for performing character-drawing, line-drawing, color-filling, scrolling, and font setting, an event driver 332 for obtaining events from a keypad, a keyboard, and a mouse, and a file I/O driver 333 for controlling a file medium.

The communication protocols include a TCP/IP 334 forming an Internet layer protocol and a transport layer protocol, a chat protocol 335 serving as an application layer protocol, a messenger protocol 336, and a mailer protocol 337. Other protocols can be used as the communication protocol. For example, UDP can be used as the transport layer protocol. Further, the communications protocols include SSL (Secure Socket Layer) 338 for maintaining the security of the TCP/IP communications and an encryption module 339 for decoding or encoding data exchanged between a client and a server according to the SSL algorithm.

The fourth layer 304 includes a window manager 341 for activating various modules and managing memory resource and a Kana-Kanji conversion system 342 serving as a FEP (Front End Processor), which system outputs kanji (Chinese characters) candidates in response to Hiragana (Japanese syllabary).

The fifth layer 305 includes an image drawing engine 351 for drawing an image created by PNG (Portable Network Graphics), GIF (Graphics Interchange Format), JPEG (Joint Photographic Experts Group), MPEG (Moving Picture Experts Group), and Java (trademarks) Script, etc. The fifth layer 305 further includes browser software 352 for analyzing the markup language and displaying a screen according to the instruction of a tag, and various APIs (Application Programming Interfaces) 353 that are interfaces for communicating with the respective server groups. In the browser software 352, a program for the document display according to the invention is stored.

The sixth layer 306 includes a screen user interface (UI) module serving as a user interface module for setting a display of various screens and dialogs.

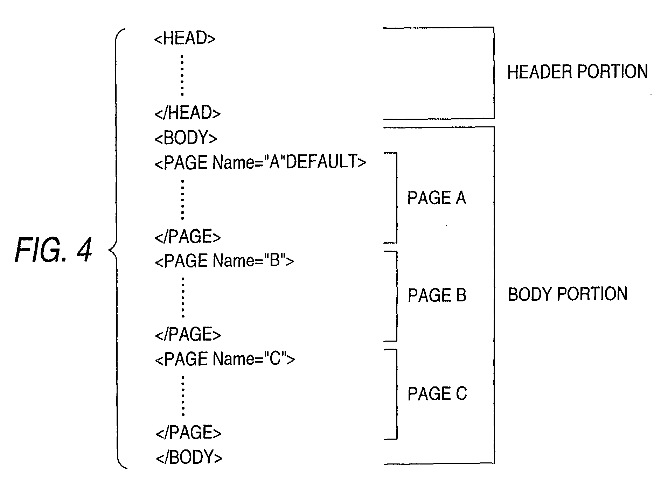

Fig. 4 is a diagram for explaining a page description file. The page description file is defined by a reserved word called a tag surrounded by <> and formed by a header portion and a body portion. The header portion is a description between <HEAD> and </HEAD>, and describes a definition of variables used in the page description file. The body portion is a description between <BODY> and </BODY>, and defines the logical structure and the layout of the document.

In an embodiment, multiple pages can be described in one page description file (description file) . In the header portion, a definition of each page is collectively described, and in the body portion, each page is defined between <PAGE... > and </PAGE>. In Fig.4, three pages are described in one page description file.

In the tag <PAGE...> for defining page A, the first page, a "DEFAULT" command is described. The "DEFAULT" command indicates that the page description file describes multiple pages and that page A is the first page to be displayed on a screen.

In a portion between <PAGE...> and </PAGE>, there are described, for example, characters to be displayed in the corresponding page. Furthermore, there may be described information, such as a Uniform Resource Locator (URL), which information indicates a location of a separate file to be used for displaying the page. The separate file may be a image file, character file, sound file, etc. The portion may include description of a single separate file or multiple separate files.

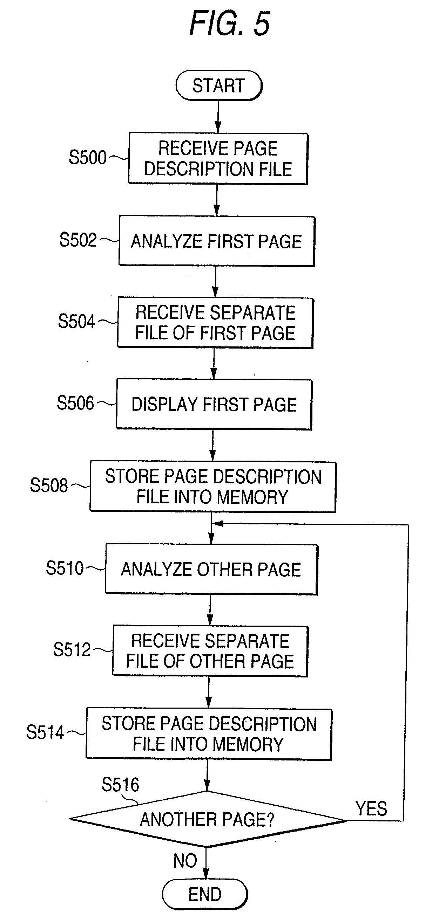

Fig.5 is a flowchart showing a document display according to one embodiment of the invention. The video game machines 103a, 103b of a client acquires the document from the server group 102, and obtains the page description file of the corresponding document from the server group 102 (S500). The browser software 352 of the video game machines 103a, 103b first analyzes the header portion of the page description file and then analyzes the body portion.

In this analysis, the browser software 352 searches for a tag <PAGE...> in the body portion and checks whether the searched <PAGE...> tag includes the "DEFAULT" command. When the tag includes the "DEFAULT" command, since the portion interposed between the tags (page A shown in Fig. 4) is the contents of the page to be displayed first, the browser software 352 analyzes the portion (S502), requests the separate file of images and the like defined in the portion, and acquires the separate file (S504). In parallel with this, the browser software 352 further analyzes the body portion of page A and notifies the image drawing engine 351 of the analysis result. The image drawing engine 351 displays the analyzed page on the TV monitor 202 (S506). Thus, the first display page can be displayed quickly.

At this time, a description in the header portion of page A and a description in the body portion of the page where the "DEFAULT" command is described are stored in a memory as the page description file of page A (S508). The separate file of images, characters and the like concerned with page A is also stored in the memory.

Then, the browser software 352 analyzes the portion describing the content of another page, in other words, another portion (page B shown in Fig.4) interposed between the <PAGE ...> tags (S510), requests the separate file of images and the like defined in the portion, and acquires the requested separate file (S512). The browser software 352 stores a description in the header portion of page B and a description in the body portion of page B into a memory as the page description file of the page B (S514). Furthermore, the browser software 352 stores the separate file of page B into a memory.

Next, the browser software 352 checks whether there is a portion describing the content of another page, in other words, another portion interposed between the <PAGE...> tags, in the body portion (S516). When there is another portion describing the content of another page, the processing from S510 to S516 is performed in the same way as mentioned above. When there is no other portion describing the content of another page, the processing is finished.

In the case where one of the pages is displayed and when an anchor indicating the link destination of another page is selected, the browser software 352 displays the page, based on the page description file of the corresponding page and the separate file of images stored in the memory, using the image drawing engine 351. Accordingly, the required page can be displayed quickly. In Fig.5, although a flow for sequentially performing each processing step has been described as one example of a flow of the processing, it is not restricted to this, and at least some parts of the flow may be processed in parallel. For example, the processing of analyzing the other page (S510) may be performed in parallel with the processing of receiving the separate file of the first page (S504).

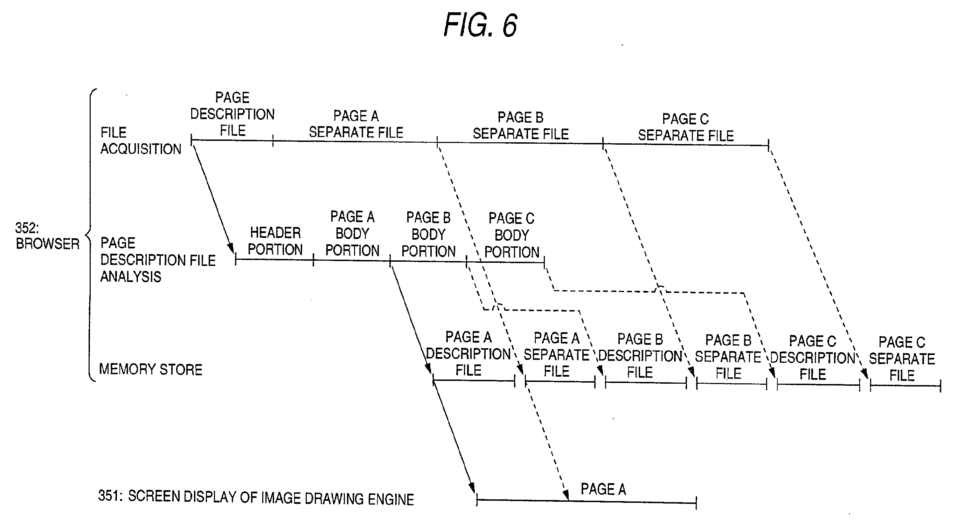

Fig.6 is a sequence view showing the procedure of the browser software and the image drawing engine. When obtaining a page description file in which multiple pages are defined, the browser software 352 analyzes only the description portion of page A with the "DEFAULT" command and requests the necessary separate file from the server. Then, the browser software 352 notifies the image drawing engine 351 of the content to be displayed. The image drawing engine 351 acquires the separate file of images and the like associated with page A and displays page A. The browser software 352 stores, into a memory, both a description from the header portion of page A and a description from the body portion of page A, as the page description file of page A.

The browser software 352 analyzes the content of page B, requests the necessary separate file from the server, and stores, into a memory, both a description from the header portion of page B and a description from the body portion of page B, as the page description file of page B. As for the other pages, the same processing will be performed.

According to the above, the first page can be properly displayed in a short time. When specifying a link destination for displaying the next page, the image drawing engine displays the page based on the page description file and the separate file already stored in the memory. Thus, it is possible to shorten a time for displaying the next page.

In the above embodiment, the description has been made with reference to a game machine, for example, as a client. For example, in the case of delivering documents to a client having a display screen of restricted size and a client incapable of scrolling a display screen, the invention may be adopted.

Needless to say, a video game machine or a personal computer can read out and execute program code from a recording medium which stores the program code of the software for realizing the document display according to the invention.

In the above embodiment, although the page description portion including the "DEFAULT" command is defined as the first page to be displayed, the invention is not restricted to this, but the page description portion first appearing in the document may be defined as the first page to be displayed.

As a recording medium for supplying the program codes, for example, a floppy (trademark) disk, a hard disk, an optical magnetic disk, an optical disk, a CD-ROM, a CD-R, a magnetic tape, a nonvolatile memory card, and a ROM can be used.

As set forth hereinabove, according to the embodiment, by describing the layout information of multiple pages in a page description file, it is possible to shorten a time for displaying each page.

The present invention is not limited to these embodiments, but various variations and modifications may be made without departing from the scope of the present invention set forth in the claims.

## Claims

1. A document display apparatus for receiving documents described in a markup language from a server connected through a network and displaying the documents, comprising:
a first receiving system that receives a description file defining a plurality of pages forming the documents;
a second receiving system that receives, from the server, at least one first separate file comprising at least one of characters, images, and sounds defined by an initial display page of the received description file;
a first displaying system that analyzes the initial display page of the received description file and displays the initial display page by using the at least one first separate file; and
a third receiving system that receives, from the server, at least one second separate file comprising at least one of characters, images, and sounds defined by a second page of the description file, after the second receiving system receives all of the first separate files.

2. The document display apparatus according to claim 1, further comprising a storing system that stores content defining a second page and the at least one second separate file relating to the second page, into a memory.

3. The document display apparatus according to claim 2, further comprising a second displaying system that analyzes the stored content defined by the second page and displays the second page, when an anchor defined by the first page to link to the second page, is selected.

4. A document display method for receiving documents described in a markup language from a server connected through a network and displaying the documents on a display system, comprising:
receiving a description file defining a plurality of pages forming the documents;
receiving, from the server, at least one first separate file comprising at least one of characters, images, and sounds defined by an initial display page of the received description file;
analyzing the initial display page of the received description file to display the initial display page by using the at least one first separate file; and
receiving, from the server, at least one second separate file comprising characters, images, and sounds defined by a second page of the description file, after receiving all of the first separate files.

5. The document display method according to claim 4, further comprising storing contents of the description file defining a second page and the at least one second separate file relating to the second page, into a memory.

6. The document display method according to claim 5, further comprising analyzing the stored contents defining the second page and displaying the second page when an anchor defined in the first page to link to the second page, is selected.

7. A recording medium on which is recorded a program executed by a computer for receiving documents described in a markup language from a server connected through a network and displaying the documents on a display system, the program causing the computer to execute:
receiving a description file defining a plurality of pages forming the documents;
receiving, from the server, at least one first separate file comprising at least one of characters, images, and sounds defined by an initial display page of the received description file;
analyzing the initial display page of the received description file to display the initial display page by using the received at least one first separate file; and
receiving, from the server, at least one second separate file comprising at least one of characters, images, and sounds defined by a second page of the description file, after receiving all of the at least one first separate files.
